# EUROPÄISCHE PATENTANMELDUNG

(11) **EP 3 805 084 A1**
(43) Veröffentlichungstag der Anmeldung: **14.04.2021**
(21) Anmeldenummer: 20199866.3
(22) Anmeldetag: 02.10.2020
(51) Int. Cl.: B62K 21/16, B62K 21/22

(54) **FAHRRADLENKERVORBAU**

(30) Priorität: 11.10.2019 DE 202019105609 U
(71) Anmelder: Canyon Bicycles GmbH, 56073 Koblenz (DE)
(72) Erfinder: Forst, Alexander, 56068 Koblenz (DE); Anderer, Marco, 56068 Koblenz (DE); Wegerle, Sebastian, 56182 Urbar (DE)
(74) Vertreter: dompatent von Kreisler Selting Werner - Partnerschaft von Patent- und Rechtsanwälten mbB

(57) **Zusammenfassung**

Ein Fahrradlenkervorbau (10) weist zur Verbindung mit einem Fahrradlenker (16) an einem vorderen Ende (14) ein Aufnahmeelement (15) auf oder ist einstückig mit dem Fahrradlenker (16) ausgebildet. Ferner ist zur Aufnahme eines Gabelschafts (30) ein Aufnahmeraum (28) vorgesehen. Mit Hilfe eines Fixierelements (20) kann ein insbesondere klemmendes Fixieren des Gabelschafts (30) am Fahrradlenkervorbau, insbesondere in dem Aufnahmeraum (28) erfolgen. Der Aufnahmeraum (28) ist derart ausgebildet, dass der Gabelschaft (30) in unterschiedlichen Positionen mit dem Fahrradlenkervorbau verbunden werden kann, ohne dass der Gabelschaft (30) an einer Oberseite (38) gegenüber dem Fahrradlenkervorbau (10) vorsteht.

## Beschreibung

Die Erfindung betrifft einen Fahrradlenkervorbau.

An einem, im montieren Zustand in Fahrtrichtung vorderen Ende eines Fahrradlenkervorbaus ist ein Fahrradlenker befestigt. Die Befestigung kann über Klemmelemente oder dergleichen erfolgen, wobei auch eine einstückige Ausbildung des Fahrradlenkervorbaus mit dem Fahrradlenker bekannt ist. Das gegenüberliegende, in Fahrtrichtung nach hinten weisende Ende des Fahrradlenkervorbaus ist mit einem Gabelschaft verbunden. Hierzu weist der Fahrradlenkervorbau einen Aufnahmeraum auf, in dem der Gabelschaft bzw. das obere Ende des Gabelschafts angeordnet ist. Der im Querschnitt runde Gabelschaft wird in einem ebenfalls runden Hohlraum aufgenommen und üblicherweise klemmend fixiert.

Vor dem Fixieren des Lenkervorbaus am Gabelschaft ist es ferner erforderlich die Lenkkopflager einzustellen. Dies erfolgt häufig durch eine im Inneren des Gabelschafts angeordnete, sich an der Oberseite des Vorbaus abstützende Spanneinrichtung. Des Weiteren ist es bekannt, unterhalb des Fahrradlenkervorbaus ein Halteelement vorzusehen. Das Halteelement umgibt ebenfalls den Gabelschaft. Mit Hilfe des Halteelements ist es möglich, nach dem Einstellen des Lagerspiels dieses zu fixieren, indem das Halteelement klemmend mit dem Gabelschaft verbunden wird. Dies hat den Vorteil, dass, nachdem das Lagerspiel eingestellt ist, der Fahrradlenkervorbau vom Gabelschaft entfernt und beispielsweise in unterschiedliche Höhe angeordnet werden kann, ohne dass bei Veränderung der Lage des Fahrradlenkervorbaus stets ein erneutes Einstellen des Lagerspiels erforderlich ist.

Zur Höhenverstellung des Lenkers ist es bekannt, den Fahrradlenkervorbau in unterschiedlicher Höhe am Gabelschaft klemmend zu befestigen. In einer hohen Position werden somit unterhalb des Fahrradlenkervorbaus den Gabelschaft umgebende Abstandselemente, sogenannte Spacer, angeordnet. Diese insbesondere ringförmig ausgebildeten Spacer sind somit zwischen dem Halteelement und dem Fahrradlenkervorbau angeordnet. Wenn der Fahrradlenkervorbau in einer tieferen Position angeordnet werden soll, werden die Spacer entnommen. Der Fahrradgabelschaft steht sodann oberhalb des Fahrradlenkervorbaus vor. In diesem Bereich wird sodann eine das Ende des Fahrradgabelschafts abdeckende Kappe vorgesehen und/oder die entsprechenden Spacer angeordnet. Um ein Vorstehen des Fahrradgabelschafts oberhalb des Fahrradlenkervorbaus zu vermeiden, müsste der Fahrradgabelschaft gekürzt werden. Dann ist jedoch keine Höhenveränderung des Fahrradlenkervorbaus mehr möglich.

Aus US2018/0222546 ist ein derartiger höhenverstellbarer Lenkervorbau bekannt. Der Lenkervorbau ist klemmend mit dem Gabelschaft verbunden, wobei unterhalb des Lenkervorbaus ein oder mehrere Abstandselemente vorgesehen sein können. In einer unteren Position des Lenkervorbaus steht der Gabelschaft über den Lenkervorbau vor. Der vorstehende Gabelschaft ist von einer Kappe verdeckt, die an einer Oberseite des Lenkervorbaus sowie an einer in Richtung des Fahrrads weisenden Rückseite des Lenkervorbaus anliegt.

Aufgabe der Erfindung ist es, einen Fahrradlenkervorbau zu schaffen, mit dem auf einfache Weise eine Höhenverstellung möglich ist.

Die Lösung der Aufgabe erfolgt erfindungsgemäß durch die Merkmale des Anspruchs 1.

Der erfindungsgemäße Fahrradlenkervorbau weist an seinem in Fahrtrichtung vorderen Ende ein Aufnahmeelement auf. Das Aufnahmeelement dient beispielsweise zur klemmenden Verbindung oder anderem Halten eines Fahrradlenkers. Ebenso kann die Verbindung auch einstückig ausgebildet sein, so dass der Fahrradlenkervorbau und der Fahrradlenker einstückig ausgestaltet sind. Ferner weist der Fahrradlenkervorbau einen Aufnahmeraum zur Aufnahme eines Gabelschafts, insbesondere eines in montiertem Zustand oberen Ende eines Gabelschafts auf. Mit Hilfe eines insbesondere in dem Fahrradlenkervorbau integrierten oder mit diesem verbundenen Fixierelement ist ein Fixieren des Gabelschafts am Vorbau, insbesondere in dem Aufnahmeraum möglich. Erfindungsgemäß ist der Aufnahmeraum derart ausgestaltet, dass der Gabelschaft in unterschiedlichen Positionen mittels des Fixierelements mit dem Vorbau verbindbar ist. Insbesondere weist der Hohlraum somit in Montage- bzw. Längsrichtung des Gabelschafts eine derartige Höhe auf, dass der Gabelschaft zumindest in zwei unterschiedlichen Positionen fixiert werden kann, ohne dass der Gabelschaft in einer unteren Position über den Fahrradlenkervorbau vorstehen würde. Besonders bevorzugt ist hierbei, dass die obere und die untere mögliche Position des Fahrradlenkervorbaus einen Mindestunterschied von 10mm, insbesondere mindestens 15mm aufweisen. Hierbei wäre auch in der untersten Position der Gabelschaft innerhalb des Aufnahmeraums angeordnet und würde somit nicht über eine Oberseite des Vorbaus vorstehen. Vorne ist eine zusätzliche Abdecckappe wie aus US2018/0222546, die oberhalb des die Kraft übertragenden Lenkervorbaus angeordnet ist, zur Abdeckung eines vorstehenden Gabelschafts nicht erforderlich. Erfindungsgemäß ist vorzugsweise somit oberhalb des die Kraft auf den Gabelschaft übertragenden Lenkervorbaus kein zusätzliches Bauteil vorgesehen und insbesondere zur Abdeckung eines vorstehenden Gabelschafts nicht erforderlich.

Das insbesondere in dem Fahrradlenkervorbau integrierte Fixierelement weist vorzugsweise ein Klemmelement auf und ist insbesondere als Klemmelement ausgebildet. Es ist somit auf einfache Weise möglich, mit Hilfe von Klemmmitteln wie Schrauben ein klemmendes Fixieren des oberen Endes des Gabelschafts in dem Aufnahmeraum des Fahrradlenkervorbaus durchzuführen. Es ist somit möglich, den Fahrradlenkervorbau in unterschiedlichen Positionen bzw. unterschiedlichen Höhen mit dem Gabelschaft zu verbinden. Je nach Höhe wird an der Unterseite des Fahrradlenkervorbaus, insbesondere zwischen dem Fahrradlenkervorbau und einem Halteelement für die Lager ein oder mehrere Abstandselemente, sogenannte Spacer vorgesehen. Es ist somit mit Hilfe des erfindungsgemäßen Fahrradlenkervorbaus auf einfache Weise möglich, diesen in unterschiedlichen Positionen mit dem Gabelschaft zu verbinden, insbesondere ohne dass das obere Ende des Gabelschafts an der Oberseite des Lenkervorbaus vorsteht.

Ferner kann der Lenkervorbau an einer Oberseite, insbesondere oberhalb des Aufnahmeraums eine Öffnung aufweisen, die vorzugsweise mit einem Deckel verschließbar ist. Beispielsweise kann die Zugänglichkeit von Spannelementen für die Lager durch diese Öffnung ermöglicht werden. Besonders bevorzugt ist es, dass der Deckel als Anlageelement für das Spannelement dient, wobei es sich bei dem Spannelement insbesondere um eine in das Gabelrohr ragende Schraube handelt. Es ist somit auf einfache Weise möglich, durch Anziehen der Schraube die Lager vorzuspannen.

Ferner betrifft die Erfindung ein Fahrradvorbausystem. Das erfindungsgemäße Fahrradvorbausystem weist einen Fahrradlenkervorbau auf, wie vorstehend beschrieben und insbesondere vorteilhaft weitergebildet. Ferner weist das Fahrradvorbausystem ein mit dem Gabelschaft verbindbares Lagerhalteelement auf. Mit Hilfe eines derartigen Lagerhalteelements, das insbesondere den Gabelschaft umgibt, ist es möglich, nach Einstellen des Lagerspiels die Position der Lager zu fixieren bzw. die Position des Gabelschafts im Gabelrohr des Rahmens zu fixieren. Beispielsweise kann das Lagerspiel über ein Spannelement wie vorstehend beschrieben, das insbesondere innerhalb des Gabelrohrs angeordnet ist und sich an einem Deckel abstützt, eingestellt werden. Nach Einstellung des Lagerspiels erfolgt durch das Lagerhalteelement ein Festlegen des Lagerspiels. Selbst ein Lösen des Spannelements führt nicht zur Veränderung des Lagerspiels, da diese über das Lagerhalteelement gehalten sind. Zum erneuten Einstellen des Lagerspiels muss das Lagerhalteelement gelöst werden. Durch Vorsehen eines derartigen Lagerhalteelements ist es möglich den Fahrradlenkervorbau zu montieren oder zu demontieren, ohne dass ein erneutes Einstellen des Lagerspiels erforderlich ist. Des Weiteren weist das erfindungsgemäße Fahrradvorbausystem mindestens ein Abstandselement auf, das zwischen dem Lagerhalteelement und dem Vorbau angeordnet werden kann. Je nach Position bzw. Höhe des Fahrradlenkervorbaus werden ein oder mehrere derartige Abstandselemente vorgesehen oder nicht.

In besonders bevorzugter Ausführungsform ist das Abstandselement derart ausgebildet, dass es bei montiertem Gabelschaft angeordnet bzw. entfernt werden kann. Es ist somit in bevorzugter Ausführungsform möglich, das mindestens eine Abstandselement beispielsweise auf den Gabelschaft aufzustecken, obwohl der Gabelschaft im Gabelrohr des Rahmens montiert und insbesondere über das Lagerhalteelement fixiert ist. Hierbei ist es des Weiteren bevorzugt, dass das Abstandselement seitlich bzw. senkrecht zu dem Gabelschaft auf diesen aufgesteckt werden kann. Dies ist beispielsweise dadurch möglich, dass das Abstandselement zwei- oder mehrteilig ausgebildet ist. Beispielsweise kann ein aus zwei teilringförmigen Elementen zusammengesetztes Halteelement vorgesehen sein. Die beiden, insbesondere einen Haltering definierenden Teile des Abstandselements könnten somit von zwei unterschiedlichen Seiten seitlich auf den Gabelschaft aufgeschoben und sodann beispielsweise über ein Verbindungselement miteinander verbunden werden.

Des Weiteren ist es möglich, dass das Abstandselement eine Seitenöffnung aufweist, so dass das Abstandselement seitlich über den bereits montierten Gabelschaft geschoben werden kann. Die Seitenöffnung kann durch ein zusätzliches Element verschlossen werden oder auch offen bleiben. Auch ist es möglich, dass das Abstandselement eine gewisse Flexibilität bzw. Elastizität aufweist, so dass die Seitenöffnung zumindest teilweise erweitert werden kann, um das Abstandselement über den Gabelschaft seitlich aufschieben bzw. aufstecken zu können.

Die erfindungsgemäße Ausgestaltung des Fahrradvorbausystems weist insbesondere den Vorteil auf, dass zur Veränderung der Position des Fahrradlenkervorbaus auf dem Gabelschaft dieser nicht vollständig vom Gabelschaft entfernt werden muss. Ein Lösen des Fixierelements des Fahrradlenkervorbaus ist ausreichend, um den Fahrradlenkervorbau in Längsrichtung des Gabelschafts zu verschieben und entsprechend das mindestens eine Abstandselement anzuordnen oder zu entfernen. Dies hat den erfindungswesentlichen besonderen Vorteil, dass zum Beispiel innerhalb des Lenkervorbaus und des Gabelschafts verlegte Kabel, Bowdenzüge oder dergleichen nicht entfernt werden müssen und auch keine derartige Länge aufweisen müssen, dass der Fahrradlenkervorbau vollständig vom Gabelschaft nach oben heruntergenommen bzw. heruntergezogen werden kann.

Bei einer weiteren bevorzugten Ausführungsform weist der Fahrradlenkervorbau insbesondere an einer in montiertem Zustand nach unten bzw. in Richtung des Lagerhalteelements weisenden Unterseite mindestens ein Positionierelement auf. Bevorzugt ist es, dass ein derartiges Positionierelement auch an dem mindestens einen Abstandselement und/oder dem Lagerhalteelement vorgesehen ist. Hierdurch ist eine exakte Positionierung der einzelnen Bauteile zueinander sichergestellt. Als Positionierelemente sind insbesondere Ansätze, Vertiefungen oder dergleichen geeignet.

Zum Einstellen unterschiedlicher Positionen bzw. Höhenlagen des Fahrradlenkervorbaus können entweder keine Abstandselemente, eines oder mehrere Abstandselemente und/oder Abstandselemente unterschiedlicher Dicke vorgesehen sein.

Des Weiteren ist es möglich, dass der Gabelschaft des Fahrradrahmens einen nicht runden Außen-Querschnitt aufweist und insofern das mindestens eine Abstandselement derart ausgebildet ist, dass es einerseits ein zumindest teilweise rundes Innenteil aufweist, das den Gabelschaft umgibt und andererseits ein nicht rundes Außenteil aufweist, das im Wesentlichen der Form des nicht runden Gabelrohrs des Fahrradrahmens entspricht.

Nachfolgend wird die Erfindung anhand einer bevorzugten Ausführungsform unter Bezugnahme auf die anliegenden Zeichnungen näher erläutert:
Es zeigen:
- Figur 1: eine schematische perspektivische Ansicht einer bevorzugten Ausführungsform des Fahrradvorbausystems,
- Figur 2: eine schematische Seitenansicht des Fahrradlenkervorbaus,
- Figur 3: eine schematische Unteransicht des Fahrradlenkervorbaus,
- Figur 4: eine schematische Längs-Schnittansicht des Fahrradlenkervorbaus,
- Figur 4a: eine der Figur 4 entsprechende Ansicht mit einem Gabelschaft in einer unteren Fixierposition,
- Figur 4b: eine der Figur 4 entsprechende Ansicht mit einem Gabelschaft in einer oberen Fixierposition und
- Figur 5: eine schematische perspektivische Ansicht eines Abstandselements.

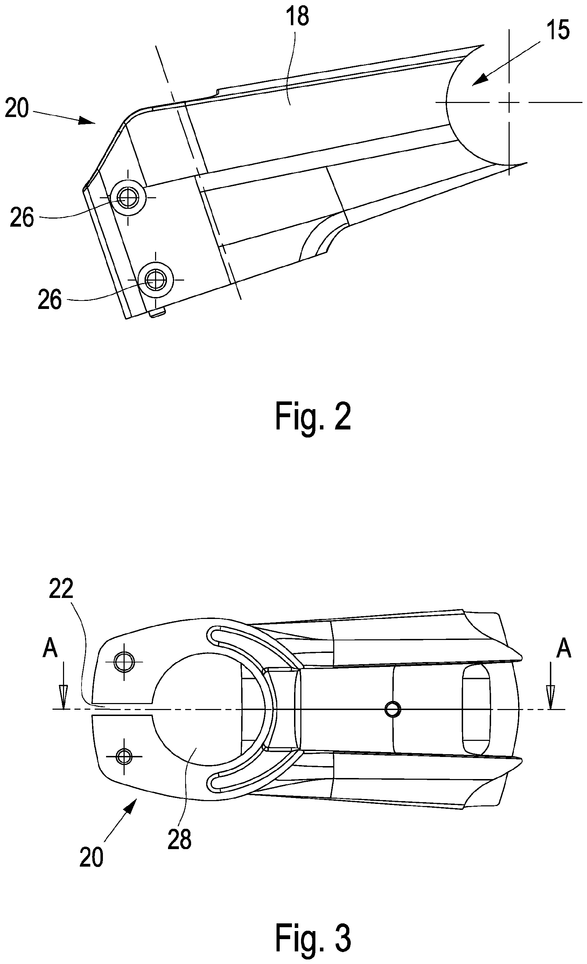

Ein Fahrradlenkervorbau 10 ist an seinem in eine Fahrtrichtung 12 weisenden vorderen Ende 14 mit einem Fahrradlenker 16 verbunden. Zur üblicherweise klemmenden Verbindung ist im Bereich des vorderen Ende 14 ein nicht näher dargestelltes Klemmelement 15 (Figur 2) angeordnet. Alternativ ist es auch möglich den Fahrradlenkervorbau 10 einstückig mit dem Lenker 16 auszugestalten.

Der Fahrradlenkervorbau 10 weist einen sich in Längsrichtung bzw. Fahrtrichtung 12 erstreckenden Grundkörper 18 auf, der an dem vorderen Ende 14 in Fahrtrichtung 12 gegenüberliegenden hinteren Ende 20 ein Fixierelement 22 aufweist. Im dargestellten Ausführungsbeispiel ist das Fixierelement 22 derart ausgebildet, dass der Fahrradlenkervorbau an seiner rückwärtigen Seite einen Schlitz 24 aufweist und das Fixierelement 20 als Klemmelement ausgebildet ist, wobei die Klemmung über, im dargestellten Ausführungsbeispiel als Schrauben 26 ausgebildete Klemmmittel erfolgt.

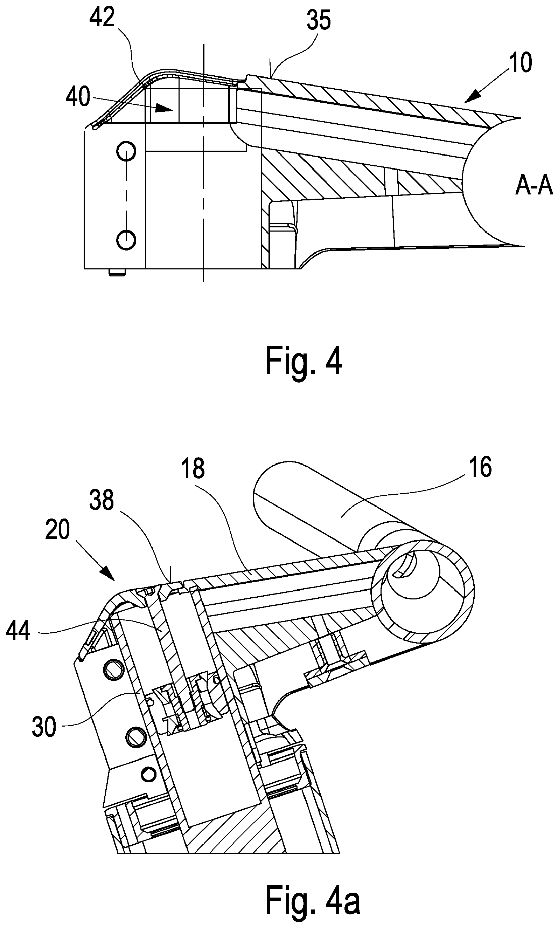

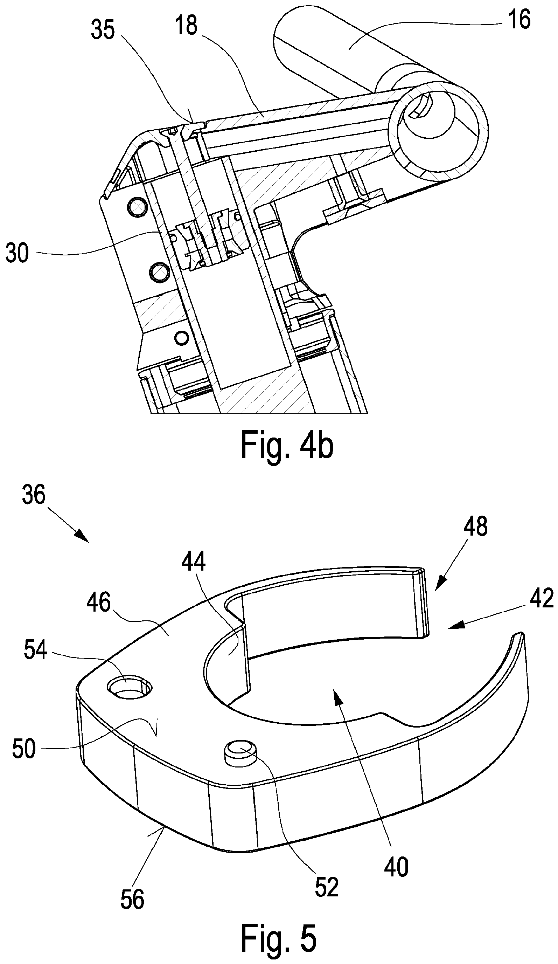

Innerhalb des Fahrradlenkervorbaus ist ein Aufnahmeraum 28 (Figur 3) ausgebildet. Der Aufnahmeraum 28 ist von dem Fixierelement 20 umgeben. In montiertem Zustand wird ein Gabelschaft 30 (Figuren 4a und 4b) in unterschiedlichen Positionen klemmend mit Hilfe des Fixierelements 20 befestigt.

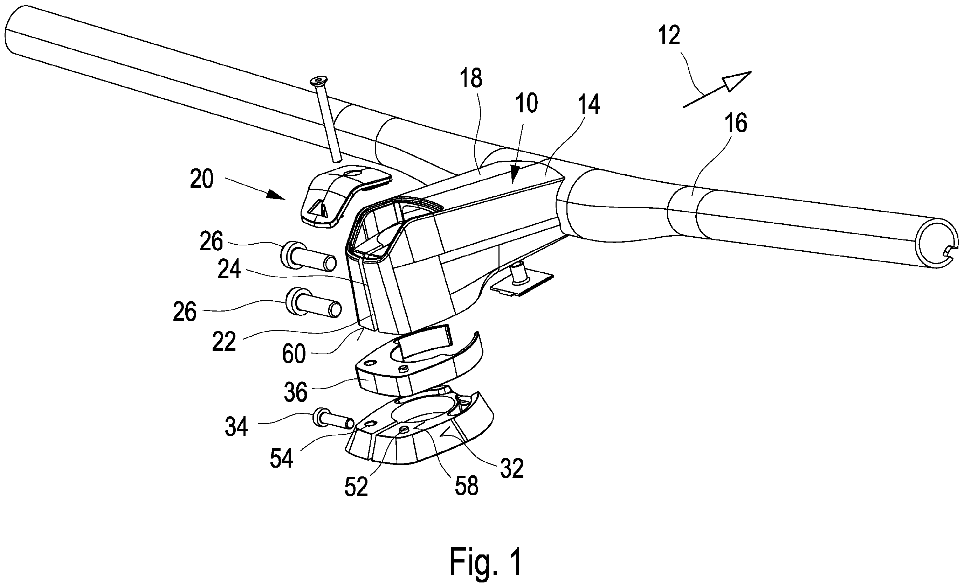

Wie insbesondere aus Figur 1 ersichtlich ist, ist in montiertem Zustand unterhalb des Fahrradlenkervorbaus 10 ein Lagerhalteelement 32 vorgesehen. Das Halteelement 32 umgibt den Gabelschaft 30 und ist mit diesem klemmend über ein wiederum als Schraube ausgebildetes Klemmmittel 34 verbunden. Das Lagerhalteelement 32 dient nach Einstellung des Lagerspiels zur Fixierung der Lager. Hierdurch erfolgt ein Montieren des Gabelschafts im Gabelrohr des Fahrradrahmens, ein anschließendes Einstellen des Lagerspiels und sodann ein klemmendes Fixieren des Lagerhaltelements 32 an dem Gabelschaft. Es ist somit möglich, anschließend den Fahrradlenkervorbau zu montieren, zu verschieben oder zu demontieren, ohne das Lagerspiel neu einstellen zu müssen. Die Verschiebung des Fahrradlenkervorbaus 10 erfolgt hierbei insbesondere zur Einstellung unterschiedlicher Lenkerpositionen in Längsrichtung des Gabelschafts, d.h. nach oben bzw. unten.

In montiertem Zustand ist zwischen dem Lagerhalteelement 32 und der Unterseite des Fahrradlenkervorbaus 10 im dargestellten Ausführungsbeispiel (Figur 1) ein Abstandselement 36 angeordnet. Hierdurch ist es möglich, den Fahrradlenkervorbau 10 in einer oberen bzw. höheren Position anzuordnen. Beispielsweise durch Entfernen des Abstandselements 36 kann der Fahrradlenkervorbau 10 in einer unteren Position angeordnet werden. Hierzu erfolgt zunächst ein Lösen der beiden Schrauben 26, ein Herausnehmen des Abstandselements 36, ein Verschieben des Fahrradlenkervorbaus 10 nach unten, bis die Unterseite des Fahrradlenkervorbaus auf einer Oberseite des Lagerhalteelements 32 aufliegt und anschließend wiederum ein klemmendes Fixieren des Lenkervorbaus 10 am Gabelschaft durch Anziehen der beiden Schrauben 26.

Durch einfaches Einsetzen oder Entnehmen des Abstandselements 36 kann der Fahrradlenkervorbau 10 somit in unterschiedlichen Positionen, wie insbesondere in den Figuren 4a und 4b dargestellt, mit dem Gabelschaft 30 verbunden werden. In beiden Positionen steht ein oberes Ende des Gabelschafts 30 nicht über eine Oberseite 38 (Figur 4) des Lenkervorbaus 10 vor.

Des Weiteren ist es möglich an der Oberseite 38 des Fahrradlenkervorbaus 10 eine Öffnung 40 vorzusehen, die mit einem Deckel 42 verschließbar ist. Durch Öffnen des Deckels 42 ist beispielsweise eine Spanneinrichtung 44 zur Einstellung des Lagerspiels zugänglich. Zur Montage erfolgt somit vor dem Fixieren des Lagerhalteelements und dem Gabelschaft 30 das Einstellen des Lagerspiels über die Spanneinrichtung 44, die sich am Deckel 42 im dargestellten Ausführungsbeispiel abstützt. Sobald das Lagerspiel eingestellt ist, erfolgt ein Fixieren des Lagerhalteelements 32 mit Hilfe der Klemmschraube 34. Anschließend könnte die Spanneinrichtung 44 gelöst oder sogar entfernt werden, da hierdurch das Lagerspiel nicht mehr verändert würde.

Das Abstandselement 36 weist insbesondere die in Figur 5 dargestellte Form auf. Das Abstandselement 36 weist eine mittige kreisrunde Öffnung 40 auf, die in montiertem Zustand den Gabelschaft umgibt und insbesondere an diesem anliegt. Die Öffnung 40 ist in einem Bereich 42 offen, um seitlich, d.h. im Wesentlichen senkrecht zu einer Gabelschaftlängsachse auf den Gabelschaft aufgesteckt werden zu können.

Im dargestellten Ausführungsbeispiel ist das Abstandselement 36 derart ausgebildet, dass es einen unrunden Außenquerschnitt aufweist. Hierzu ist ein die Öffnung 40 aufweisendes Innenteil 44 des Abstandselements 36 von einem Außenteil 46 zumindest teilweise umgeben. Das Außenteil 46 weist somit eine unrunde Außenform auf, die insbesondere im Wesentlichen einer unrunden Ausgestaltung eines Gabelrohrs eines Fahrradrahmens entspricht. Das Außenteil 46 weist im Bereich der Öffnung 42 ebenfalls eine Öffnung 48 auf.

Des Weiteren sind an einer Oberseite 50 des Abstandselements 36 Positionierelemente 52, 54 vorgesehen. Hierbei ist das Positionierelement 52 als Pin oder Stift und das Positionierelement 54 als kreisringförmige Öffnung ausgebildet. Entsprechend komplementäre Positionierelemente sind an einer gegenüberliegenden Unterseite 56 des Abstandselements, an einer Oberseite 58 des Lagerhalteelements 32 (Figur 1) sowie auch an einer Unterseite 60 des Fahrradlenkervorbaus 10 vorgesehen.

## Patentansprüche

1. Fahrradlenkervorbau mit
einem am vorderen Ende (14) vorgesehenen Aufnahmeelement (15) für einen Fahrradlenker (16),
einem Aufnahmeraum (28) zur Aufnahme eines Gabelschafts (30) und einem Fixierelement (20) zur Fixierung des Gabelschafts (30) am Fahrradlenkervorbau (10),
**dadurch gekennzeichnet, dass**
der Aufnahmeraum (28) derart ausgebildet ist, dass der Gabelschaft (30) in mindestens zwei unterschiedlichen Positionen mittels des Fixierelements (20) mit dem Fahrradlenkervorbau (10) verbindbar ist, in denen der Gabelschaft (30) nicht über eine Oberseite (38) des Fahrradlenkervorbaus vorsteht.

2. Fahrradlenkervorbau nach Anspruch 1, **dadurch gekennzeichnet, dass** ein freies Ende des Gabelschafts (30) in zumindest zwei unterschiedlichen Fixierpositionen innerhalb des Aufnahmeraums (28) angordenbar ist.

3. Fahrradlenkervorbau nach Anspruch 1 oder 2, **dadurch gekennzeichnet, dass** das Fixierelement (20) als Klemmelement ausgebildet ist, so dass insbesondere über Klemmmittel (26), wie Schrauben, ein klemmendes Fixieren des Gabelschafts (30) erfolgt.

4. Fahrradlenkervorbau nach einem der Ansprüche 1 bis 3, **dadurch gekennzeichnet, dass** der Aufnahmeraum (28) an einer Oberseite (38) des Fahrradlenkervorbaus (10) eine Öffnung (40) aufweist, die vorzugsweise mit einem Deckel (42) verschließbar ist.

5. Fahrradlenkervorbau nach Anspruch 4, **dadurch gekennzeichnet, dass** durch die Öffnung (40) eine Spanneinrichtung (44) zugänglich ist, wobei der Deckel (42) vorzugsweise als Anlageelement für die Spanneinrichtung (44) dient.

6. Fahrradvorbausystem mit
einem Fahrradlenkervorbau nach einem der Ansprüche 1 bis 5,
einem mit dem Gabelschaft (30) verbindbaren Lagerhalteelement (32) und
einem zwischen dem Lagerhalteelement (32) und dem Fahrradlenkervorbau (10) vorsehbaren Abstandselement (36).

7. Fahrradvorbausystem nach Anspruch 6, **dadurch gekennzeichnet, dass** das Abstandselement (36) derart ausgebildet ist, dass es in montiertem Zustand des Gabelschafts (30) angeordnet und/entfernt werden kann.

8. Fahrradvorbausystem nach Anspruch 6 oder 7, **dadurch gekennzeichnet, dass** das Abstandselement (36) eine Seitenöffnung (42) aufweist, zum seitlichen Aufstecken auf den Gabelschaft (30).

9. Fahrradvorbausystem nach einem der Ansprüche 6 bis 8, **dadurch gekennzeichnet, dass** das Lagerhalteelement (32) am Gabelschaft (30) klemmend, insbesondere über ein Klemmmittel (34) fixiert ist.

10. Fahrradvorbausystem nach einem der Ansprüche 6 bis 9, **dadurch gekennzeichnet, dass** der Fahrradlenkervorbau (10) und/oder das Abstandselement (36) und/oder das Lagerhalteelement (32) Positionierelemente (52, 54) aufweist.

11. Fahrradvorbausystem nach einem der Ansprüche 6 bis 10, **dadurch gekennzeichnet, dass** zur Einstellung unterschiedlicher Positionen des Fahrradlenkervorbaus (10) des Abstandselement (36) vorgesehen ist oder entfällt.

12. Fahrradvorbausystem nach einem der Ansprüche 6 bis 11, **dadurch gekennzeichnet, dass** zur Einstellung unterschiedlicher Positionen des Fahrradlenkervorbaus (10) des Abstandselement (36) unterschiedliche Dicken aufweist und/oder mehrere Abstandselemente (36) vorgesehen sind.
